# EUROPEAN PATENT SPECIFICATION

(11) **EP 2 042 527 B1**
(45) Date of publication and mention of the grant of the patent: **12.05.2010**
(21) Application number: 08171976.7
(22) Date of filing: 08.12.2004
(51) Int. Cl.: C08F 220/22, G02F 1/01, G02B 5/12

(54) **Polymerizable compositions for optical articles**
Polymerisierbare Zusammensetzungen für optische Artikel
Compositions polymerisables pour articles optiques

(30) Priority: 30.12.2003 US 747985
(43) Date of publication of application: 01.04.2009
(62) Divisional of application: 04813569.3
(73) Proprietor: 3M Innovative Properties Company, St. Paul MN 55133-3427 (US)
(72) Inventor: Olson, David B., Saint Paul, Minnesota 55133-3427 (US); Berg, Brandon T., Saint Paul, Minnesota 55133-3427 (US); Larson, Randy A., Saint Paul, Minnesota 55133-3427 (US)
(74) Representative: Vossius & Partner

(56) References cited:
- US-A- 5 626 800
- US-A- 5 932 626
- US-A1- 2002 123 589
- US-B1- 6 280 063
- US-B1- 6 355 754

## Description

Polymerizable compositions particularly useful for optical articles such as for example brightness enhancing films.

Certain microreplicated optical products, such as described in U.S. Pat. Nos. 5,175,030 and 5,183,597, are commonly referred to as a "brightness enhancing films". brightness enhancing films are utilized in many electronic products to increase the brightness of a backlit flat panel display such as a liquid crystal display (LCD) including those used in electroluminescent panels, laptop computer displays, word processors, desktop monitors, televisions, video cameras, as well as automotive and aviation displays.

Brightness enhancing films desirably exhibit specific optical and physical properties including the index of refraction of a brightness enhancing film that is related to the brightness gain (i.e. "gain") produced. Improved brightness can allow the electronic product to operate more efficiently by using less power to light the display, thereby reducing the power consumption, placing a lower heat load on its components, and extending the lifetime of the product

Brightness enhancing films have been prepared from high index of refraction monomers that are cured or polymerized, as described for example in U.S. Pat. Nos. 5,908,874; 5,932,626; 6,107,364; 6,280,063; 6,355,754; as well as EP 1 014113 and WO 03/076528.

Although various polymerizable compositions that are suitable for the manufacture of brightness enhancing films are known, industry would find advantage in alternative compositions.

In one embodiment of the present invention, a brightness enhancing film is provided that comprises the reaction product of a polymerizable composition consisting essentially of:
a) a first monomer selected from
   i) a monomer comprising a major portion having the structure 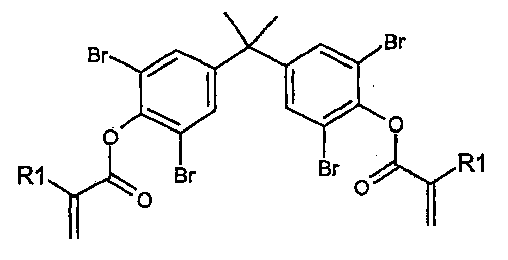 wherein R1 is independently hydrogen or methyl; and
   ii) a monomer comprising a major portion having the structure 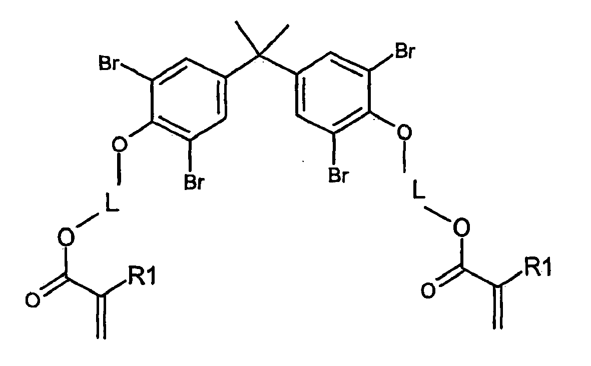 wherein R1 is independently hydrogen or methyl, and
      L is a linking group independently selected from
      linear C₂-C₁₂ alkyl groups,
      branched C₂-C₁₂ alkyl groups, and
      -CH₂CH(OH)CH₂-
   and mixtures thereof;
b) a crosslinking agent comprising at least three (meth)acrylate functional groups;
c) at least one monofunctional (meth)acrylate diluent; and
d) a photoinitiator.

In another embodiment, a brightness enhancing film is provided that comprises the reaction product of a polymerizable composition consisting essentially of:
a) a first monomer comprising a major portion of 2-propenoic acid, (1-methylethylidene)bis[(2,6-dibromo-4,1-phenylene)oxy(2-hydroxy-3,1-propanediyl)] ester;
b) a crosslinking agent selected from pentaerythritol tri(meth)acrylate, trimethylolpropane tri(meth)acrylate, and mixtures thereof;
c) phenoxyethyl (meth)acrylate; and
d) a photoinitiator.

For each of the embodiments just described, the first monomer is preferably present in the polymerizable composition in an amount of at least 40 wt-% (e.g. 50 wt-%, 60 wt-%).

In another embodiment, a brightness enhancing film is provided that comprises the reaction product of one or more of the first monomers just described in an amount totaling at least 50 wt-% and a crosslinking agent comprising at least three (meth)acrylate functional groups.

For all the embodiments described just described, the crosslinking agent is preferably a liquid at ambient temperature. The crosslinking agent is preferably pentaerythritol tri(meth)acrylate, pentaerythritol tetra(meth)acrylate, trimethylolpropane tri(meth)acrylate, and mixtures thereof. Pentaerythritol triacrylate can be used as the sole crosslinking agent. The crosslinking agent is preferably present in the polymerizable composition in an amount ranging from about 5 wt-% to about 20 wt-%. The monofunctional (meth)acrylate diluent is preferably a liquid at ambient temperature. The diluent can be phenoxyethyl (meth)acrylate, benzyl (meth)acrylate, and mixtures thereof. Phenoxyethyl acrylate can be employed as the sole diluent. The diluent can be employed in the polymerizable composition in an amount ranging from about 10 wt-% to about 35 wt-%.

The polymerizable compositions described herein may also be advantageous for other optical articles.

FIG. 1 is a perspective view of an illustrative microstructure-bearing optical product of the present invention.

FIG. 2 is a schematic view of an illustrative backlit liquid crystal display including the brightness enhancing film of the invention.

As used within the present description:
"Index of refraction," or "refractive index," refers to the absolute refractive index of a material (e.g., a monomer) that is understood to be the ratio of the speed of electromagnetic radiation in free space to the speed of the radiation in that material, with the radiation being sodium yellow light at a wavelength of about 589.3 nm. Index of refraction can be measured using an Abbe refractometer, available commercially, for example, from Fisher Instruments of Pittsburgh, PA. It is generally appreciated that the measured index of refraction can vary to some extent depending on the instrument.
"(Meth)acrylate" refers to both acrylate and methacrylate compounds.
"Polymerizable composition" refers to a chemical composition that contains one or more polymerizable components as described in the present specification, including at least the identified monomers that can be cured or polymerized.

"Brightness enhancing films" include microstructure-bearing articles having a regular repeating pattern of symmetrical tips and grooves. Other examples of groove patterns include patterns in which the tips and grooves are not symmetrical and in which the size, orientation, or distance between the tips and grooves is not uniform. Examples of brightness enhancing films are described in Lu et al., U.S. Pat. No. 5,175,030, and Lu, U.S. Pat. No. 5,183,597.

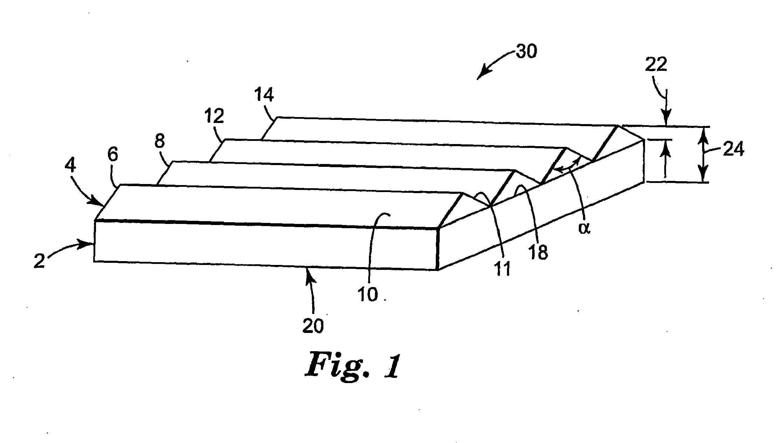

Referring to Figure 1, the brightness enhancing film 30 of the invention generally comprises base layer 2 and optical layer 4. Optical layer 4 comprises a linear array of regular right prisms, identified as prisms 6, 8, 12, and 14. Each prism, for example, prism 6, has a first facet 10 and a second facet 11. The prisms 6, 8, 12, and 14 are formed on base 2 that has a first surface 18 on which the prisms are formed and a second surface 20 that is substantially flat or planar and opposite first surface 18. By right prisms it is meant that the apex angle α is typically about 90°. However, this angle can range from 70° to 120° and may range from 80° to 100°. Further the corner can be either sharp or rounded. The prism facets need not be identical, and the prisms may be tilted with respect to each other. The relationship between the total thickness 24 of the optical article, and the height 22 of the prisms, may vary. However, it is typically desirable to use relatively thinner optical layers with well-defined prism facets. A typical ratio of prism height 22 to total thickness 24 is generally between 25/125 and 2/125.

The base layer of the brightness enhancing film can be of a nature and composition suitable for use in an optical product, i.e. a product designed to control the flow of light. Many materials can be used as a base material provided the material is sufficiently optically clear and is structurally strong enough to be assembled into or used within a particular optical product. Preferably, the base material is chosen that has sufficient resistance to temperature and aging that performance of the optical product is not compromised over time.

The particular chemical composition and thickness of the base material for any optical product can depend on the requirements of the particular optical product that is being constructed. That is, balancing the needs for strength, clarity, temperature resistance, surface energy, adherence to the optical layer, among others. The thickness of the base layer is typically at least about 0.025 millimeters (mm) and more typically at least about 0.075 mm. Further, the base layer generally has a thickness of no more than about 0.5 mm and preferably no more than about 0.175.

Useful base layer materials include cellulose acetate butyrate, cellulose acetate propionate, cellulose triacetate, polyether sulfone, polymethyl methacrylate, polyurethane, polyester, polycarbonate, polyvinyl chloride, syndiotactic polystyrene, polyethylene naphthalate, copolymers or blends based on naphthalene dicarboxylic acids, and glass. Optionally, the base material can contain mixtures or combinations of these materials. For example, the base may be multi-layered or may contain a dispersed phase suspended or dispersed in a continuous phase. Exemplary base layer materials include polyethylene terephthalate (PET) and polycarbonate. Examples of useful PET films include photograde polyethylene terephthalate (PET) and PET commercially available from DuPont Films of Wilmington, Delaware, under the trade designation "Milinex."

The base layer material can be optically active, and can act as a polarizing material. A number of base layer materials are known to be useful as polarizing materials. Polarization of light through a film can be accomplished, for example, by the inclusion of dichroic polarizers in a film material that selectively absorbs passing light. Light polarization can also be achieved by including inorganic materials such as aligned mica chips or by a discontinuous phase dispersed within a continuous film, such as droplets of light modulating liquid crystals dispersed within a continuous film. As an alternative, a film can be prepared from microfine layers of different materials. The polarizing materials within the film can be aligned into a polarizing orientation, for example, by employing methods such as stretching the film, applying electric or magnetic fields, and coating techniques.

Examples of polarizing films include those described in U.S. Pat. Nos. 5,825,543 and 5,783,120. The use of these polarizer films in combination with a brightness enhancement film has been described in U.S. Pat. No. 6,111,696. Another example of a polarizing film is described in U.S. Pat. No. 5,882,774. Multilayer polarizing films are sold by 3M Company, St. Paul, MN under the trade designation DBEF (Dual Brightness Enhancement Film). The use of such multilayer polarizing optical film in a brightness enhancement film has been described in U.S. Pat. No. 5,828,488.

Other polarizing and non-polarizing films can also be useful as the base layer for brightness enhancing films of the invention such as described in U.S. Pat. Nos. 5,612,820 and 5,486,949, among others.

The present invention relates to a polymerizable resin composition useful for optical articles and in particular the optical layer of a brightness enhancing film. The polymerizable composition includes at least two monomers. The polymerizable resin composition comprises a first monomer having a refractive index of at least 1.54, at least one crosslinking agent, and optionally yet preferably at least one monofunctional reactive diluent. Suitable methods of polymerization are known in the art including solution polymerization, suspension polymerization, emulsion polymerization, and bulk polymerization, for example, in the presence of a free-radical initiator. The composition of the invention is preferably polymerizable by irradiation with ultraviolet or visible light in the presence of a photoinitiator. The first monomer, crosslinking agent, and optional diluent preferably comprise (meth)acrylate functional groups. In preferred embodiments the first monomer and crosslinking agent comprise solely acrylate functionality and thus are substantially free of methacrylate functional groups.

The first monomer comprises a major portion having the general structures: 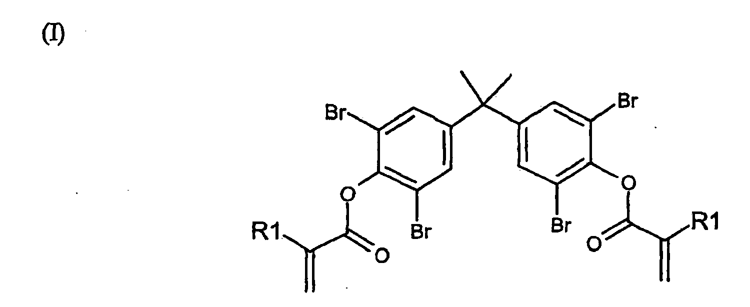 or

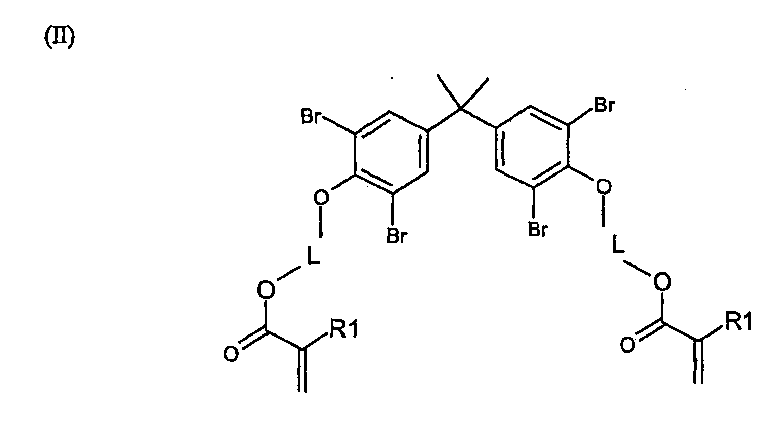

In each of structures I and II, each R1 is independently hydrogen or methyl. Typically, the R1 groups are the same. In structure II, L is a linking group. L may independently comprise a branched or linear C₂-C₁₂ alkyl group. Typically, the linking groups are the same. Preferably the alkyl group comprises no more than 8 carbon atoms and more preferably no more than 6 carbon atoms. Alternatively, L is -CH₂CH(OH)CH₂-.

The first monomer may be synthesized or purchased. As used herein, major portion refers to at least 60-70 wt-% of the monomer containing the specific structure(s) just described. It is commonly appreciated that other reaction products are also typically present as a byproduct of the synthesis of such monomers.

The first monomer is preferably the reaction product of Tetrabromobisphenol A diglycidyl ether and acrylic acid. Preferred first monomers have acrylate functionality and are substantially free of methacrylate functionality. For example, the first monomer may be obtained from UCB Corporation, Smyrna, GA under the trade designation "RDX-51027". This material comprises a major portion of 2-propenoic acid, (1-methylethylidene)bis[(2,6-dibromo-4,1-phenylene)oxy(2-hydroxy-3,1-propanediyl)] ester.

Although, mixtures of such first monomers may also suitably be employed, for ease in manufacturing it is preferred to employ as few different monomers as possible, yet still attain a brightness enhancing film with suitable gain. To meet this end, it is preferred that the brightness enhancing film is comprised of the reaction product of only one of these first monomers and in particular the reaction product of Tetrabromobisphenol A diglycidyl ether and acrylic acid.

The first monomer is preferably present in the polymerizable composition in an amount of at least 40 wt-% (e.g. 50 wt-%, 60 wt-%, and any integer therebetween). Typically, the amount of the first monomer does not exceed about 80 wt-%.

In addition to the first monomer having a high refractive index, the polymerizable composition of the invention also includes at least one and preferably only one crosslinking agent. Multi-functional monomers can be used as crosslinking agents to increase the glass transition temperature of the polymer that results from the polymerizing of the polymerizable composition. The glass transition temperature can be measured by methods known in the art, such as Differential Scanning Calorimetry (DSC), modulated DSC, or Dynamic Mechanical Analysis. Preferably, the polymeric composition is crosslinked sufficiently to provide a glass transition temperature that is greater than 45°C. The crosslinking agent comprises at least three (meth)acrylate functional groups. Since methacrylate groups tend to be less reactive than acrylate groups, it is preferred that the crosslinking agent comprises three or more acrylate groups. Suitable crosslinking agents include for example pentaerythritol tri(meth)acrylate, pentaerythritol tetra(meth)acrylate, trimethylolpropane tri(methacrylate), dipentaerythritol hexa(meth)acrylate, trimethylolpropane ethoxylate tri(meth)acrylate, glyceryl tri(meth)acrylate, pentaerythritol propoxylate tri(meth)acrylate. Trimethylolpropane tri(methacrylate) is a preferred crosslinking agent for obtaining reduced viscosity.

The crosslinking agent is present in the polymerizable composition in an amount of at least 5 wt-%. The amount of crosslinking agent is not greater than 30 wt-%. The crosslinking agent may be present in any amount (i.e. integer) between 5 wt-% and 30 wt-% as well. Preferably, the concentration of the crosslinking agent does not exceed about 20 wt-%.

The crosslinking agents are selected from pentaerythritol tri(meth)acrylate, pentaerythritol tetra(meth)acrylate, trimethylolpropane tri(meth)acrylate, and mixtures thereof. More preferably the crosslinking agent(s) is free of methacrylate functionality. Pentaerythritol triacrylate (PETA) is particularly preferred. Pentaerythritol triacrylate (PETA) is commercially available from several sources including Sartomer, Exton, PA under the trade designation "SR444"; from Osaka Organic Chemical Industry, Ltd. Osaka, Japan under the trade designation "Viscoat #300"; from Toagosei Co. Ltd., Tokyo, Japan under the trade designation "Aronix M-305"; and from Eternal Chemical Co., Ltd., Kaohsiung, Taiwan under the trade designation "Etermer 235". Trimethylol propane triacrylate (TMPTA) is commercially available from purchased from Sartomer under the trade designation "SR351" and from Toagosei Co. Ltd. Under the trade designation "Aronix M-309".

The polymerizable resin composition optionally, yet preferably comprises up to about 35 wt-% (e.g. integers ranging from 1 to 35) reactive diluents to reduce the viscosity of the polymerizable resin composition. The amount of diluent typically ranges from about 15 wt-% to about 20 wt-%. Reduced viscosity is also amenable to improved the processability. Reactive diluents are monofunctional (meth)acrylate-functional monomers typically having a refractive index greater than 1.50. Such reactive diluents are typically non-halogenated (e.g. non-brominated). Suitable reactive diluents include for example phenoxyethyl (meth)acrylate, phenoxy-2-methylethyl (meth)acrylate, phenoxyethoxyethyl (meth)acrylate, 3-hydroxy-2-hydroxypropyl (meth)acrylate, benzyl (meth)acrylate, 4-(1-methyl-1-phenethyl)phenoxyethyl (meth)acrylate and phenylthioethyl (meth)acrylate.

The inclusion of only one diluent is preferred for ease in manufacturing. A preferred diluent is phenoxyethyl (meth)acrylate, and in particular phenoxyethyl acrylate (PEA). Phenoxyethyl acrylate is commercially available from more than one source including from Sartomer under the trade designation "SR339"; from Eternal Chemical Co. Ltd. under the trade designation "Etermer 210"; and from Toagosei Co. Ltd under the trade designation "TO-1166". Benzyl acrylate is commercially available from AlfaAeser Corp, Ward Hill, MA.

Suitable methods of polymerization include solution polymerization, suspension polymerization, emulsion polymerization, and bulk polymerization, as are known in the art. Suitable methods include heating in the presence of a free-radical initiator as well as irradiation with electromagnetic radiation such as ultraviolet or visible light in the presence-of a-photoinitiator. Inhibitors are frequently used in the synthesis of the polymerizable composition to prevent premature polymerization of the resin during synthesis, transportation and storage. Suitable inhibitors include hydroquinone and 4-methoxy phenol at levels of 50-1000 ppm. Other kinds and/or amounts of inhibitors may be employed as known to those skilled in the art.

The composition of the present invention optionally comprises a least one photoinitiator. A single photoinitiator or blends thereof may be employed in the brightness enhancement film of the invention. In general the photoinitiator(s) are at least partially soluble (e.g. at the processing temperature of the resin) and substantially colorless after being polymerized. The photoinitiator may be (e.g. yellow) colored, provided that the photoinitiator is rendered substantially colorless after exposure to the UV light source.

Suitable photoinitiators include monoacylphosphine oxide and bisacylphosphine oxide. Commercially available mono or bisacylphosphine oxide photoinitiators include 2,4,6-trimethylbenzoydiphenylphosphine oxide, commercially available from BASF (Charlotte, NC) under the trade designation "Lucirin TPO"; ethyl-2,4,6-trimethylbenzoylphenyl phosphinate, also commercially available from BASF under the trade designation "Lucirin TPO-L"; and bis (2,4,6-trimethylbenzoyl)-phenylphosphine oxide commercially available from Ciba Specialty Chemicals under the trade designation "Irgacure 819". Other suitable photoinitiators include 2-hydroxy-2-methyl-1-phenyl-propan-1-one, commercially available from Ciba Specialty Chemicals under the trade designation "Darocur 1173" as well as other photoinitiators commercially available from Ciba Specialty Chemicals under the trade designations "Darocur 4265", "Irgacure 651", "Irgacure 1800", "Irgacure 369", "Irgacure 1700", and "Irgacure 907".

The photoinitiator can be used at a concentration of about 0.1 to about 10 weight percent More preferably, the photoinitiator (e.g. blend) is used at a concentration of about 0.2 to about 2 wt-%. Greater than 5 wt-% is generally disadvantageous in view of the tendency to cause yellow discoloration of the brightness enhancing film. Other photoinitiators and photoinitiator may also suitably be employed as may be determined by one of ordinary skill in the art.

Surfactants such as fluorosurfactants and silicone based surfactants can optionally be included in the polymerizable composition to reduce surface tension, improve wetting, allow smoother coating and fewer defects of the coating, etc.

As described in Lu and Lu et al., a microstructure-bearing article (e.g. brightness enhancing film) can be prepared by a method including the steps of (a) preparing a polymerizable composition (i.e. the polymerizable composition of the invention); (b) depositing the polymerizable composition onto a master negative microstructured molding surface in an amount barely sufficient to fill the cavities of the master; (c) filling the cavities by moving a bead of the polymerizable composition between a preformed base and the master, at least one of which is flexible; and (d) curing the composition. The master can be metallic, such as nickel, nickel-plated copper or brass, or can be a thermoplastic material that is stable under the polymerization conditions, and that preferably has a surface energy that allows clean removal of the polymerized material from the master. One or more the surfaces of the base film can be optionally be primed or otherwise be treated to promote adhesion of the optical layer to the base.

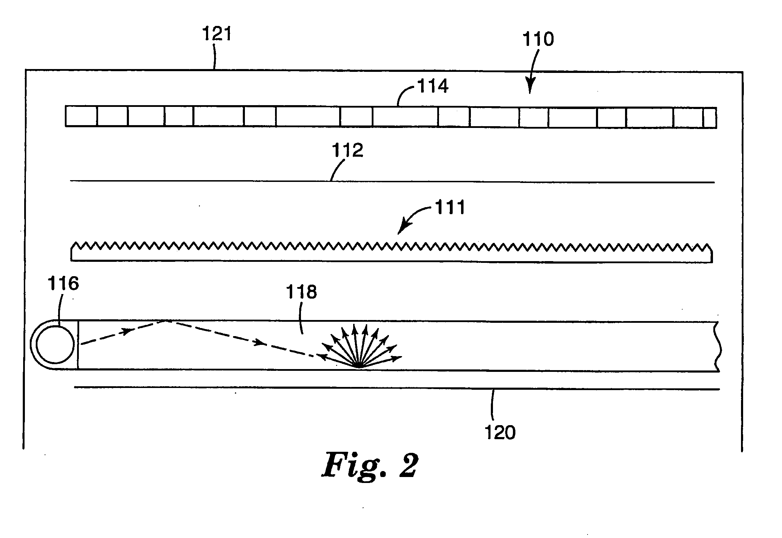

The brightness enhancing film of the invention is usefully employed in a display for the purpose of improving the gain. A schematic view of an illustrative backlit liquid crystal display generally indicated at 110 in FIG. 2. In the actual display, the various components depicted are often in contact with the brightness enhancing film. The brightness enhancing film 111 of the present invention is generally positioned between a light guide 118 and a liquid crystal display panel 114. The liquid crystal display panel typically includes an absorbing polarizer on both surfaces. Thus, such absorbing polarizer is positioned adjacent to the brightness enhancing film of the invention. The backlit liquid crystal display can also include a light source 116 such as a fluorescent lamp and a white reflector 120 also for reflecting light also toward the liquid crystal display panel. The brightness enhancing film 111 collimates light emitted from the light guide 118 thereby increasing the brightness of the liquid crystal display panel 114. The increased brightness enables a sharper image to be produced by the liquid crystal display panel and allows the power of the light source 116 to be reduced to produce a selected brightness. The backlit liquid crystal display is useful in equipment such as computer displays (laptop displays and computer monitors), televisions, video recorders, mobile communication devices, handheld devices (i.e. cell phone, personal digital assistant (PDA)), automobile and avionic instrument displays, and the like, represented by reference character 121.

The display may further include another optical film 112 positioned between the brightness enhancing film and the liquid crystal display panel 114. The other optical film may include for example a diffuser, a reflective polarizer, or a second brightness enhancing film. Other optical films may be positioned between optical film 112 and the liquid crystal display panel 114 or between the brightness enhancing film 111 and the light guide 118, as are known in the art.

Examples of polarizing films include those described in U.S. Pat. Nos. 5,825,543 and 5,783,120. The use of these polarizer films in combination with a brightness enhancing film has been described in U.S. Pat. No. 6,111,696. Another example of a polarizing film is described in U.S. Pat. No. 5,882,774. One example of such films that are available commercially are the multilayer films sold under the trade designation DBEF (Dual Brightness Enhancement Film) from 3M Company. Multilayer polarizing optical films have been described, for example in U.S. Pat. No. 5,828,488. If these additional optical films are included as the base layer of the brightness enhancing films, than the thickness of the base layer may be considerably greater than previously described.

The polymerizable composition described herein may be advantageous for other optical materials such as microstructure bearing optical articles (e.g. films). Exemplary optical materials include optical lenses such as Fresnel lenses, optical films, such as high index of refraction films e.g., microreplicated films such as totally internal reflecting films, or brightness enhancing films, flat films, multilayer films, retroreflective sheeting, optical light fibers or tubes, and others. The production of optical products from high index of refraction polymerizable compositions is described, for example, in U.S. Pat. No. 4,542,449.
In the following the preferred embodiments are summarized:
1. A brightness enhancing film comprising the reaction product of a polymerizable composition consisting essentially of:
   a) a first monomer comprising a major portion of 2 propenoic acid, (1-methylethylidene)bis[(2,6-dibromo-4,1-phenylene)oxy(2-hydroxy-3,1-propanediyl)] ester;
   b) a crosslinking agent selected from pentaerythritol tri(meth)acrylate, trimethylolpropane tri(meth)acrylate, and mixtures thereof;
   c) phenoxyethyl (meth)acrylate; and
   d) optionally a photoinitiator.
2. The brightness enhancing film of item 1 wherein the first monomer is present in the polymerizable composition in an amount of at least 40 wt-%.
3. The brightness enhancing film of item 1 wherein the first monomer is present in the polymerizable composition in an amount of at least 50 wt-%.
4. The brightness enhancing film of item 1 wherein the first monomer is present in the polymerizable composition in an amount of at least about 60 wt-%.
5. The brightness enhancing film of item 1 wherein the crosslinking agent is present in the polymerizable composition in an amount ranging from about 5 wt-% to about 30 wt-%.
6. The brightness enhancing film of item 1 wherein the crosslinking agent is present in the polymerizable composition in an up to about 35 wt-%.
7. A brightness enhancing film comprising the reaction product of a polymerizable composition consisting essentially of:
   a) a first monomer selected from
      i) a monomer comprising a major portion having the structure 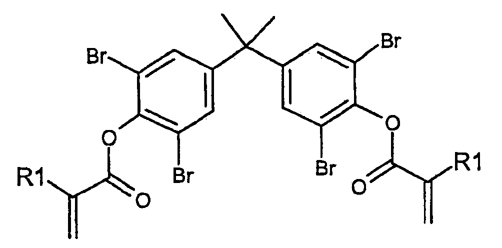 wherein R1 is independently hydrogen or methyl; and
      ii) a monomer comprising a major portion having the structure 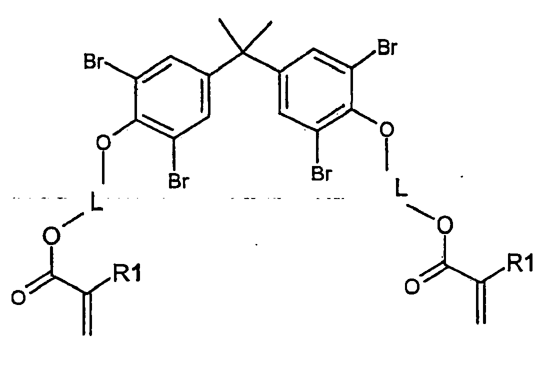 wherein R1 is independently hydrogen or methyl, and
         L is a linking group independently selected from the group consisting of
         linear C₂-C₁₂ alkyl groups,
         branched C₂-C₁₂ alkyl groups and
         -CH₂CH(OH)CH₂-;
      and mixtures thereof; and
   b) a crosslinking agent comprising at least three (meth)acrylate functional groups;
   c) at least one monofunctional (meth)acrylate diluent; and
   d) optionally a photoinitiator.
8. The brightness enhancing film of item 7 wherein the crosslinking agent is a liquid a ambient temperature.
9. The brightness enhancing film of item 8 wherein the crosslinking agent is selected from the group consisting pentaerythritol tri(meth)acrylate, pentaerythritol tetra(meth)acrylate, trimethylolpropane tri(meth)acrylate, and mixtures thereof.
10. The brightness enhancing film of item 7 wherein the monofunctional (meth) acrylate diluent is a liquid at ambient temperature.
11. The brightness enhancing film of item 10 wherein the monofunctional (meth)acrylate diluent comprises phenoxyethyl (meth)acrylate, benzyl (meth)acrylate, and mixtures thereof.
12. The brightness enhancing film of item 7 wherein the first monomer is free of methacrylate functional groups.
13. A brightness enhancing film comprising the reaction product of
   a) at least 50 wt-% of one or more first monomers selected from the group consisting of:
      i) a monomer comprising a major portion having the structure 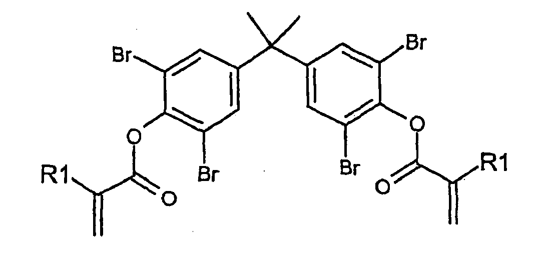 wherein R1 is independently hydrogen or methyl; and
      ii) a monomer comprising a major portion having the structure 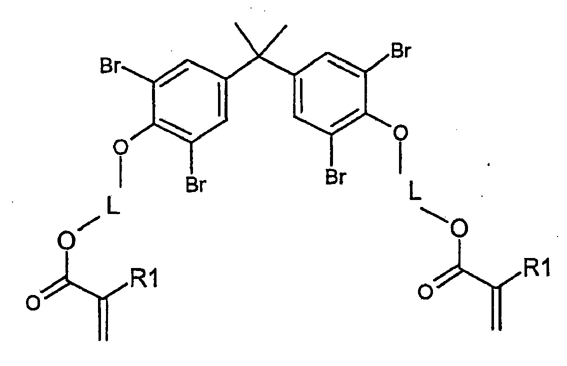 wherein R1 is independently hydrogen or methyl, and
         L is a linking group independently selected from
         linear C₂-C₁₂ alkyl groups,
         branched C₂-C₁₂ alkyl groups, and
         -CH₂CH(OH)CH₂-;
      and mixtures thereof; and
   b) a crosslinking agent comprising at least three (meth)acrylate functional groups.
14. The brightness enhancing film of item 13 wherein the first monomer consists of the reaction product of Tetrabromobisphenol A diglycidyl ether and (meth) acrylic acid.
15. The brightness enhancing film of item 13 wherein the crosslinking agent is a liquid at ambient temperature.
16. The brightness enhancing film of item 15 wherein the crosslinking agent is selected from the group consisting pentaerythritol tri(meth)acrylate, pentaerythritol tetra(meth)acrylate, trimethylolpropane tri(meth) acrylate, and mixtures thereof.
17. The brightness enhancing film of item 13 further comprising at least one monofunctional (meth)acrylate diluent
18. The brightness enhancing film of item 17 wherein the diluent is a liquid at room temperature.
19. The brightness enhancing film of item 18 wherein the monofunctional (meth)acrylate diluent comprises phenoxyethyl (meth)acrylate, benzyl (meth)acrylate, and mixtures thereof.
20. The brightness enhancing film of item 18 wherein the polymerizable composition is free of methacrylate functional monomer.
21. An article comprising the brightness enhancing film of item 13 and a second optical film in contact with the brightness enhancing film.
22. The article of item 21 wherein the second optical film is a diffuser.
23. The article of item 21 wherein the second optical film is an absorbing polarizer.
24. The article of item 21 wherein the second optical film is a reflective polarizer.
25. The article of item 21 wherein the second optical film comprises a prismatic structure.
26. A polymerizable resin composition comprising
   a) at least 50 wt-% of one or more first monomers selected from the group consisting of:
      i) a monomer comprising a major portion having the structure 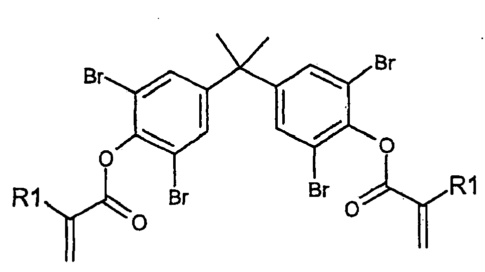 wherein R1 is independently hydrogen or methyl; and
      ii) a monomer having a major portion having the structure 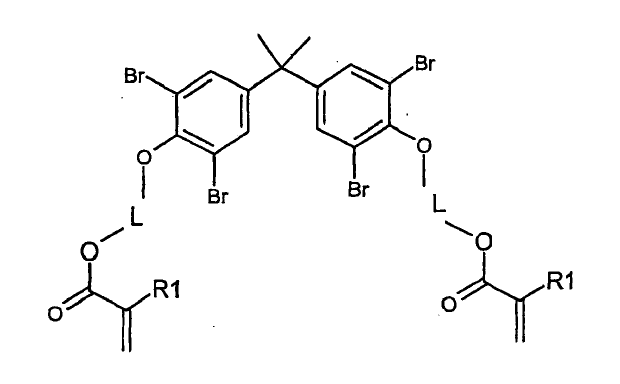 wherein R1 is independently hydrogen or methyl, and
         L is a linking group independently selected from
         linear C₂-C₁₂ alkyl groups,
         branched C₂-C₁₂ alkyl groups, and
         -CH₂CH(OH)CH₂-;
      and mixtures thereof; and
   b) a crosslinking agent comprising at least three (meth)acrylate functional groups.
27. An optical material comprising the reaction product of item 26.
28. The optical material of item 26 wherein the material is a film.
29. The optical material of item 26 wherein the film comprises a microstructured surface.

Advantages of the invention are further illustrated by the following examples. All percentages and ratios herein are by weight unless otherwise specified.

### EXAMPLES

### Test Methods

### 1. GAIN TEST METHOD

Gain, the difference in transmitted light intensity of an optical material compared to a standard material, was measured on a SpectraScan™ PR-650 SpectraColorimeter available from Photo Research, Inc, Chatsworth, CA. Results of this method for each example formed below are reported in the RESULTS section below. In order to measure the single sheet gain (i.e. "SS") film samples were cut and placed on a Teflon light cube that is illuminated via a light-pipe using a Foster DCR II light source such that the grooves of the prisms are normal to the front face of the Teflon light cube. For crossed sheet gain (i.e. "XS") a second sheet of the same material is placed underneath the first sheet and orientated such that the grooves of the second sheet are parallel to the front face of the Teflon light cube.

In two sets of experiments, polymerizable resin compositions were prepared into brightness enhancing films using a master tool that had a 90° apex angles as defined by the slope of the sides of the prisms. In the first set of experiments, the mean distance between adjacent apices was about 24 micrometers and the apex of the prism vertices was sharp. In the second set of experiments, the mean distance between adjacent apices was about 50 micrometers the apex of the prism vertices was rounded. The polymerizable resin compositions were heated to a temperature of about 50°C and poured onto the master tool in a sufficient volume to create a continuous film. The master tool and polymerizable resin were pulled through a coating bar device to create a thickness of polymerizable resin of approximately 13 microns in the first set of experiments and approximately 25 microns in the second set of experiments. After coating, a PET film was laminated onto polymerizable resin. The master tool, polymerizable resin, and PET film were then placed into UV curing machine and exposed at 3000 millijoules/cm². After curing, the polymerized resin and PET were peeled from the master tool.

In the first set of experiments brightness enhancing films were prepared from polymerizable resin compositions 1-6 along with a control (i.e. Control 1 of Table I). In a second set of experiments brightness enhancing films were prepared from polymerizable resin compositions 7-8 along with a control (i.e. Control 2 of Table II). For each set of experiments the control consisted of a mixture of 12.5 wt-% PEA, 37.5 wt-% BR-31, 30 wt-% RDX-51027, 20 wt-% of a crosslinker obtained from UCB Corporation under the trade designation "EB-9220", 1 pph Darocur 1173, and 0.3 wt-% surfactant, commercially available from 3M Company under the trade designation "FC-430'".

Table I as follows sets forth the amount of first monomer, kind and amount of monofunctional diluent (i.e. phenoxyethyl acrylate (PEA), benzyl acrylate) kind and amount of crosslinking agent (i.e. PETA, TMPTA) as well as the kind and amount of photoinitators employed in the examples. The first monomer employed in the examples comprised at least about 60-70 wt-% of 2-propenoic acid, (1-methylethylidene)bis[(2,6-dibromo-4,1-phenylene)oxy(2-hydroxy-3,1-propanediyl)] ester.

**Table I**

| **Polymerizable Resin Composition** | **Photo-initiator 1 pph** | **% PEA** | **% First Monomer** | **% PETA** | **Other** | **SS Gain** | **XS Gain** |
|---|---|---|---|---|---|---|---|
| **Control 1** | | | | | | 1.632 | 2.515 |
| **1** | D1173 | 20.0 | 65.0 | 15.0 | 0.0 | 1.637 | 2.512 |
| **2** | TPO | 20.0 | 65.0 | 15.0 | 0.0 | 1.644 | 2.524 |
| **3** | D1173 | 27.5 | 62.5 | 10.0 | 0.0 | 1.635 | 2.515 |
| **4** | D1173 | 25.0 | 60.0 | 15.0 | 0.0 | 1.649 | 2.500 |
| **5** | TPO | 25.0 | 60.0 | 15.0 | 0.0 | 1.626 | 2.502 |
| **6** | D1173 | 20.0 | 70.0 | 10.0 | 0.0 | 1.646 | 2.520 |
| **7** | TPO | 20.0 | 65.0 | 0.0 | 10.0 TMPTA | 1.565 | 2.370 |
| **8** | TPO | 0.0 | 65.0 | 15.0 | 20.0 benzyl acrylate | 1.569 | 2.354 |
| **Control 2** | | | | | | 1.571 | 2.367 |

The results show that all the exemplified polymerized compositions have suitable gain for use as brightness enhancing films. Surprisingly, some of the polymerizable compositions exhibit an even higher gain than the control.

## Claims

1. A brightness enhancing film comprising a base layer and an optical layer, the optical layer comprising a linear array of regular right prisms wherein the prisms are prepared from the reaction product of a polymerizable resin composition comprising:
a) at least 50 wt-% of one or more first monomers selected from the group consisting of:
i) a monomer comprising a major portion having the structure 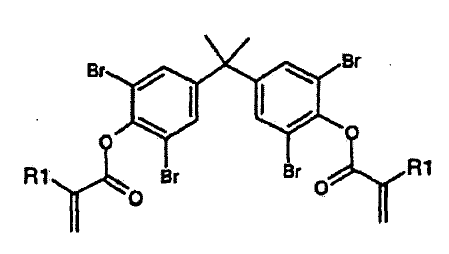 wherein R1 is independently hydrogen or methyl; and
ii) a monomer comprising a major portion having the structure 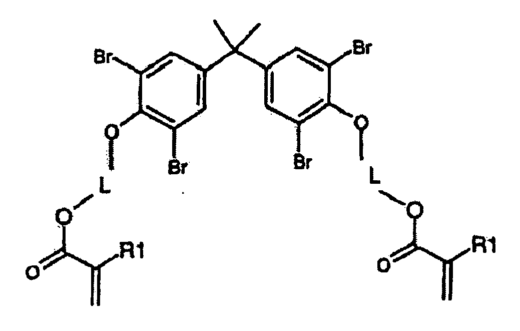 wherein R1 is independently hydrogen or methyl, and
L is a linking group independently selected from
linear C₂-C₁₂ alkyl groups,
branched C₂-C₁₂ alkyl groups, and
-CH₂CH(OH)CH₂-;
and mixtures thereof; and
b) 5 wt-% to 30 wt-% of a crosslinking agent selected from the group consisting of pentaerythritol tri(meth)acrylate, pentaerythritol tetra(meth)acrylate, trimethylolpropane tri(meth)acrylate, and mixtures thereof; and
c) up to 35 wt-% of at least one monofunctional (meth)acrylate diluent.

2. The brightness enhancing film of claim 1 wherein the monofunctional (meth)acrylate diluent is a liquid at ambient temperature.

3. The brightness enhancing film of claim 2 wherein the monofunctional (meth)acrylate diluent comprises phenoxyethyl (meth)acrylate, benzyl (meth)acrylate, and mixtures thereof.

4. The brightness enhancing film of claim 1 wherein the first monomer is free of methacrylate functional groups.

5. The brightness enhancing film of claim 1 wherein the first monomer consists of the reaction product of Tetrabromobisphenol A diglycidyl ether and (meth) acrylic acid.

6. An article comprising the brightness enhancing film of claim 1 and a second optical film in contact with the brightness enhancing film.

7. The article of claim 6 wherein the second optical film is a diffuser.

8. The article of claim 6 wherein the second optical film is an absorbing polarizer.

9. The article of claim 6 wherein the second optical film is a reflective polarizer.

10. The article of claim 6 wherein the second optical film comprises a prismatic structure.

11. A polymerizable resin composition comprising
a) at least 50 wt-% of one or more first monomers selected from the group consisting of:
i) a monomer comprising a major portion having the structure 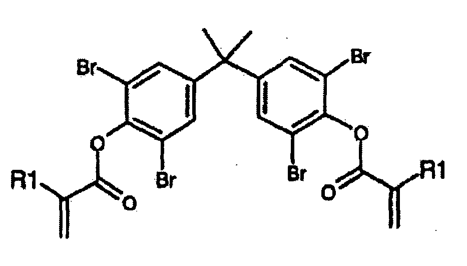 wherein R1 is independently hydrogen or methyl; and
ii) a monomer having a major portion having the structure 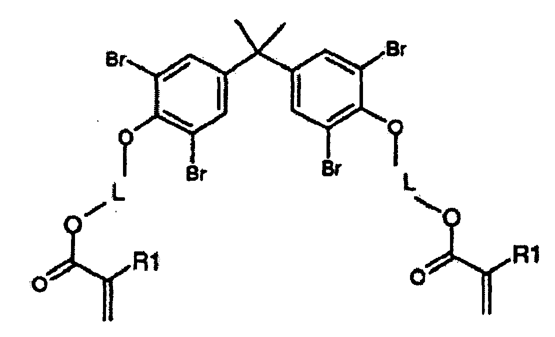 wherein R1 is independently hydrogen or methyl, and
L is a linking group independently selected from
linear C₂-C₁₂ alkyl groups,
branched C₂-C₁₂ alkyl groups, and
-CH₂CH(OH)CH₂-;
and mixtures thereof; and
b) 5 wt-% to 30 wt-% of a crosslinking agent selected from the group consisting of pentaerythritol tri(meth)acrylate, pentaerythritol tetra(meth)acrylate, trimethylolpropane tri(meth)acrylate, and mixtures thereof; and
c) up to 35 wt-% of at least one monofunctional (meth)acrylate diluent.

12. The brightness enhancing film of claim 11 wherein the monofunctional (meth)acrylate diluent comprises phenoxyethyl (meth)acrylate, benzyl (meth)acrylate, and mixtures thereof.

13. An optical material comprising the reaction product of claim 11.

14. The optical material of claim 13 wherein the material is a film.

15. The optical material of claim 13 wherein the film comprises a microstructured surface.

## Patentansprüche

1. Helligkeit verbessernder Film, umfassend eine Basisschicht und eine optische Schicht, wobei die optische Schicht ein lineares Array aus regelmäßigen geraden Prismen umfasst, wobei die Prismen aus dem Reaktionsprodukt einer polymerisierbaren Harzzusammensetzung hergestellt werden, umfassend:
a) mindestens 50 Gewichtsprozent eines ersten Monomers oder mehrerer erster Monomere, ausgewählt aus der Gruppe bestehend aus:
i) einem Monomer, das einen Hauptteil mit folgender Struktur umfasst 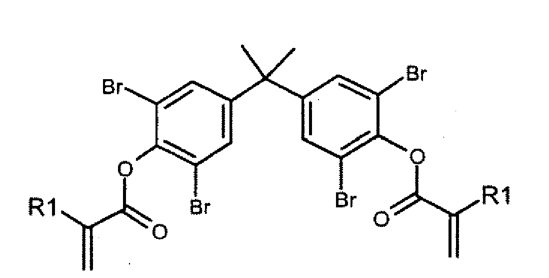 wobei R1 unabhängig Wasserstoff oder Methyl ist; und
ii) einem Monomer, das einen Hauptteil mit folgender Struktur umfasst 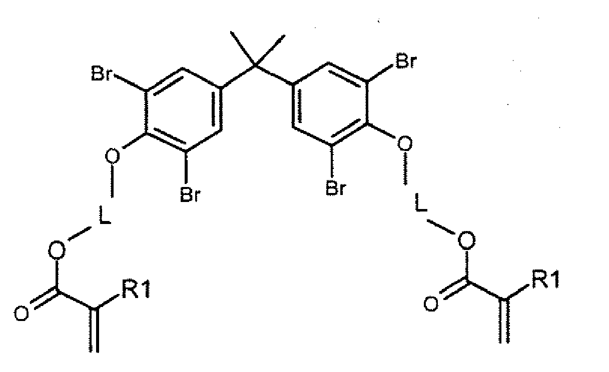 wobei R1 unabhängig Wasserstoff oder Methyl ist; und
L eine Verbindungsgruppe ist, die unabhängig ausgewählt ist aus
linearen C₂-C₁₂ Alkylgruppen,
verzweigten C₂-C₁₂ Alkylgruppen und
-CH₂CH(OH)CH₂-;
und Gemischen davon; und
b) von 5 Gewichtsprozent bis 30 Gewichtsprozent eines Vernetzungsmittels ausgewählt aus der Gruppe bestehend aus Pentaerythritol-tri(meth)acrylat, Pentaerythritol-tetra(meth)acrylat, Trimethylolpropan-tri(meth)acrylat und Gemischen davon; und
c) bis zu 35 Gewichtsprozent mindestens eines monofunktionellen (Meth)acrylat-Verdünnungsmittels.

2. Helligkeit verbessernder Film nach Anspruch 1, wobei das monofunktionelle (Meth)acrylat-Verdünnungsmittel eine Flüssigkeit bei Umgebungstemperatur ist.

3. Helligkeit verbessernder Film nach Anspruch 2, wobei das monofunktionelle (Meth)acrylat-Verdünnungsmittel Phenoxyethyl(meth)acrylat, Benzyl(meth)acrylat und Gemische davon umfasst.

4. Helligkeit verbessernder Film nach Anspruch 1, wobei das erste Monomer frei von funktionellen Methacrylatgruppen ist.

5. Helligkeit verbessernder Film nach Anspruch 1, wobei das erste Monomer aus dem Reaktionsprodukt von Tetrabrombisphenol-A-diglycidylether und (Meth)acrylsäure besteht.

6. Gegenstand, umfassend den Helligkeit verbessernden Film nach Anspruch 1 und einen zweiten optischen Film in Kontakt mit dem Helligkeit verbessernden Film.

7. Gegenstand nach Anspruch 6, wobei der zweite optische Film ein Diffusor ist.

8. Gegenstand nach Anspruch 6, wobei der zweite optische Film ein absorbierender Polarisator ist.

9. Gegenstand nach Anspruch 6, wobei der zweite optische Film ein reflektierender Polarisator ist.

10. Gegenstand nach Anspruch 6, wobei der zweite optische Film eine prismatische Struktur umfasst.

11. Polymerisierbare Harzzusammensetzung mit:
a) mindestens 50 Gewichtsprozent eines ersten Monomers oder mehrerer erster Monomere, ausgewählt aus der Gruppe bestehend aus:
i) einem Monomer, das einen Hauptteil mit folgender Struktur umfasst 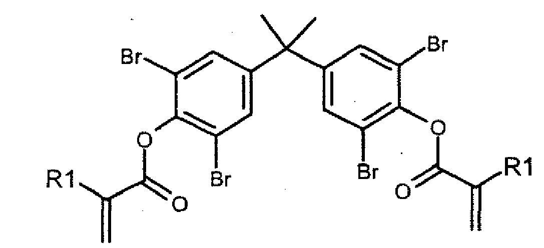 wobei R1 unabhängig Wasserstoff oder Methyl ist; und
ii) einem Monomer, das einen Hauptteil mit folgender Struktur umfasst 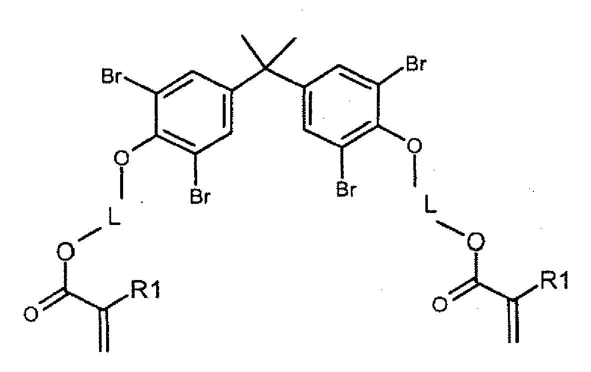 wobei R1 unabhängig Wasserstoff oder Methyl ist; und
L eine Verbindungsgruppe ist, die unabhängig ausgewählt ist aus
linearen C₂-C₁₂ Alkylgruppen,
verzweigten C₂-C₁₂ Alkylgruppen und -CH₂CH(OH)CH₂-;
und Gemischen davon; und
b) von 5 Gewichtsprozent bis 30 Gewichtsprozent eines Vernetzungsmittels ausgewählt aus der Gruppe bestehend aus Pentaerythritol-tri(meth)acrylat, Pentaerythritol-tetra(meth)acrylat, Trimethylolpropan-tri(meth)acrylat und Gemischen davon; und
c) bis zu 35 Gewichtsprozent mindestens eines monofunktionellen (Meth)acrylat-Verdünnungsmittels.

12. Helligkeit verbessernder Film nach Anspruch 11, wobei das monofunktionelle (Meth)acrylat-Verdünnungsmittel Phenoxyethyl(meth)acrylat, Benzyl(meth)acrylat und Gemische davon umfasst.

13. Optisches Material, umfassend das Reaktionsprodukt nach Anspruch 11.

14. Optisches Material nach Anspruch 13, wobei das Material ein Film ist.

15. Optisches Material nach Anspruch 13, wobei der Film eine mikrostrukturierte Oberfläche umfasst.

## Revendications

1. Film améliorant la luminosité comprenant une couche de base et une couche optique, la couche optique comprenant un réseau linéaire de prismes droits réguliers, dans lequel les prismes sont préparés à partir du produit de réaction d'une composition de résine polymérisable comprenant :
a) au moins 50 % en poids d'un ou plusieurs premiers monomères choisis dans le groupe constitué par :
i) un monomère comprenant une partie principale ayant la structure 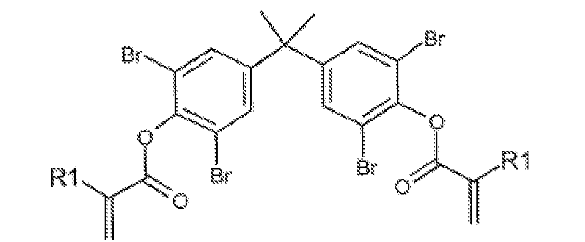 dans laquelle R1 représente indépendamment un hydrogène ou un groupe méthyle ; et
ii) un monomère comprenant une partie principale ayant la structure 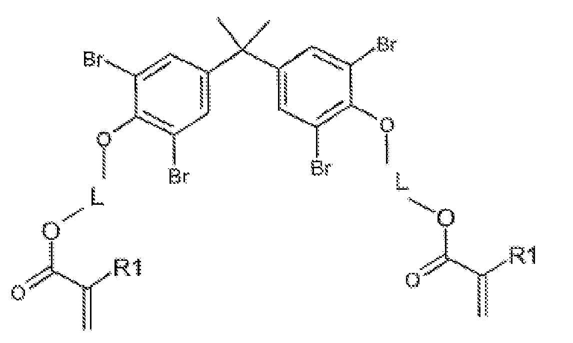 dans laquelle R1 représente indépendamment un hydrogène ou un groupe méthyle, et
L est un groupe de liaison indépendamment choisi parmi
les groupes alkyle en C₂-C₁₂ linéaires,
les groupes alkyle en C₂-C₁₂ ramifiés, et
-CH₂CH(OH)CH₂- ;
et les mélanges de ceux-ci ; et
b) de 5 % en poids à 30 % en poids d'un agent de réticulation choisi dans le groupe constitué par le tri(méth)acrylate de pentaérythritol, le tétra(méth)acrylate de pentaérythritol, le tri(méth)acrylate de triméthylolpropane, et les mélanges de ceux-ci ; et
c) jusqu'à 35 % en poids d'au moins un diluant à base de (méth)acrylate monofonctionnel.

2. Film améliorant la luminosité selon la revendication 1 dans lequel le diluant à base de (méth)acrylate monofonctionnel est un liquide à température ambiante.

3. Film améliorant la luminosité selon la revendication 2 dans lequel le diluant à base de (méth)acrylate monofonctionnel comprend du (méth)acrylate de phénoxyéthyle, du (méth)acrylate de benzyle, et les mélanges de ceux-ci.

4. Film améliorant la luminosité selon la revendication 1 dans lequel le premier monomère est exempt de groupes fonctionnels méthacrylate.

5. Film améliorant la luminosité selon la revendication 1 dans lequel le premier monomère se compose du produit de réaction d'éther diglycidylique de tétrabromobisphénol A et d'acide (méth)acrylique.

6. Article comprenant le film améliorant la luminosité selon la revendication 1 et un second film optique en contact avec le film améliorant la luminosité.

7. Article selon la revendication 6 dans lequel le second film optique est un diffuseur.

8. Article selon la revendication 6 dans lequel le second film optique est un polariseur absorbant.

9. Article selon la revendication 6 dans lequel le second film optique est un polariseur réfléchissant.

10. Article selon la revendication 6 dans lequel le second film optique comprend une structure prismatique.

11. Composition de résine polymérisable comprenant :
a) au moins 50 % en poids d'un ou plusieurs premiers monomères choisis dans le groupe constitué par :
i) un monomère comprenant une partie principale ayant la structure 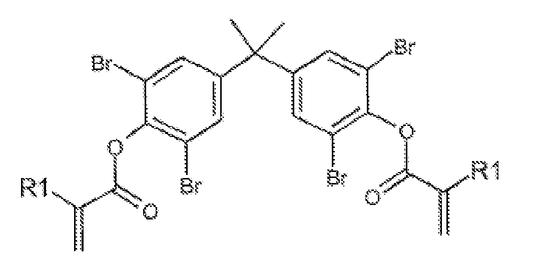 dans laquelle R1 représente indépendamment un hydrogène ou un groupe méthyle ; et
ii) un monomère comportant une partie principale ayant la structure 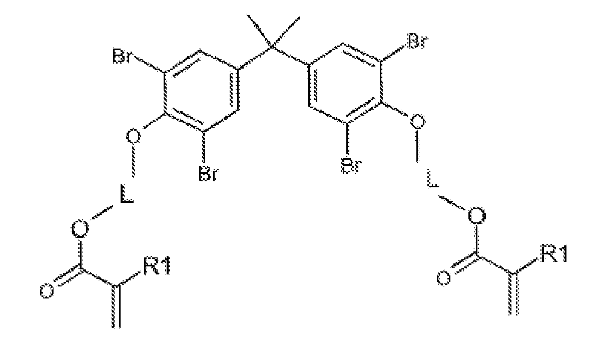 dans laquelle R1 représente indépendamment un hydrogène ou un groupe méthyle, et
L est un groupe de liaison indépendamment choisi parmi
les groupes alkyle en C₂-C₁₂ linéaires,
les groupes alkyle en C₂-C₁₂ ramifiés, et
-CH₂CH(OH)CH₂- ;
et les mélanges de ceux-ci ; et
b) de 5 % en poids à 30 % en poids d'un agent de réticulation choisi dans le groupe constitué par le tri(méth)acrylate de pentaérythritol, le tétra(méth)acrylate de pentaérythritol, le tri(méth)acrylate de triméthylolpropane, et les mélanges de ceux-ci ; et
c) jusqu'à 35 % en poids d'au moins un diluant à base de (méth)acrylate monofonctionnel.

12. Film améliorant la luminosité selon la revendication 11 dans lequel le diluant à base de (méth)acrylate monofonctionnel comprend du (méth)acrylate de phénoxyéthyle, du (méth)acrylate de benzyle, et les mélanges de ceux-ci.

13. Matériau optique comprenant le produit de réaction de la revendication 11.

14. Matériau optique selon la revendication 13, le matériau étant un film.

15. Matériau optique selon la revendication 13, le film comprenant une surface microstructurée.
